# EUROPEAN PATENT SPECIFICATION

(11) **EP 2 199 595 B1**
(45) Date of publication and mention of the grant of the patent: **18.12.2013**
(21) Application number: 08425803.7
(22) Date of filing: 18.12.2008
(51) Int. Cl.: F02N 11/08, B60W 20/00, B60K 6/00, B60K 28/12

(54) **Method for the starting and the stopping of an engine by means of a stop and start function of a vehicle, and relative device**
Verfahren zum Starten und Stoppen eines Motors mittels einer Stopp- und Startfunktion eines Fahrzeugs und dazugehörige Vorrichtung
Procédé pour le démarrage et l'arrêt d'un moteur au moyen d'une fonction d'arrêt et de démarrage d'un véhicule, et dispositif associé

(43) Date of publication of application: 23.06.2010
(73) Proprietor: Iveco S.p.A., 10156 Torino (IT)
(72) Inventor: Abbatantuoni, Vincenzo, 10134 Torino (IT); Vaglio, Paolo, 10128 Torino (IT)
(74) Representative: Borsano, Corrado

(56) References cited:
- EP-A1- 1 612 408
- GB-A- 2 413 999
- US-B1- 6 371 889

## Description

### Application field of the invention

The present invention refers to a method for the starting and the stopping of an engine by means of a stop and start function of a vehicle, and relative device.

### Description of the prior art

The Stop & Start function in a vehicle allows to stop and to immediately restart the engine when the vehicle is stationary but is about to be restarted, and is useful in a number of situations when there are numerous temporary stops of the vehicle, for example because of the traffic lights, during the delivery of goods, in the traffic jams etc., when it is useless to keep the engine started.

The usefulness of said energy saving function is evident since it allows to save fuel, but it also allows to reduce pollution, especially in urban areas.

However some problems arise concerning the proper management of said function, especially as regards the correct starting and stopping of the engine, in terms of efficiency for guaranteeing driving safety and proper management of the vehicle.

Examples of managing methods of start and stop functions are given in the patents GB2413999 or US6371889.

### Summary of the invention

Therefore the aim of the present invention is to provide a method for the starting and stopping of an engine by means of a stop and start function of a vehicle, and its relative device, which solves the problems mentioned above.

The present invention relates in particular to a method for the starting and stopping of an engine by means of a stop and start function of a vehicle, and its relative device, as described more fully in the claims, which are an integral part of this description.

### Brief description of the Figures

Further purposes and advantages of the present invention will become clear from the following detailed description of a preferred embodiment (and relative alternative embodiments) and the drawings that are attached hereto, which are merely illustrative and not limitative, in which:
figures from 1 to 3 show flowcharts illustrating the method according to the present invention.
In the drawings the same reference numbers and letters are used to identify the same elements or components.

### Detailed description of preferred embodiments of the invention

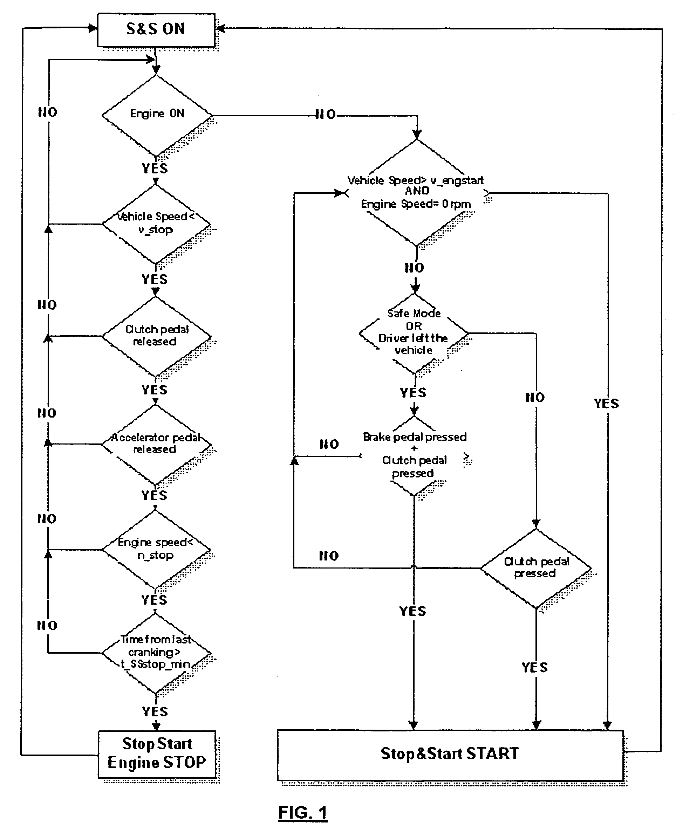

The diagram in figure 1 shows the conditions wherein the engine is started or stopped with the stop & start function (from now on it will be indicated by its acronym S&S) activated, if the mechanical transmission is present. Acronyms identifying the functions carried out are indicated in the different blocks of figures 1, 2 and 3.

First of all it should be mentioned that the S&S function may be activated or deactivated manually by means of a switch or button on the dashboard, or is activated and deactivated by means of any procedure of the type known, controlled by an electronic vehicular control unit, if some vehicular conditions occur, which is not necessary to describe here. When the S&S function is operating (S&S ON), if the engine is started (Engine ON), the following conditions are continually verified:
- if the vehicle speed is under a certain threshold (e.g. 3 km/h) (Vehicle speed < v_stop) so that the vehicle may be considered as stationary or almost stationary;
- if the clutch pedal is completely released (Clutch pedal released);
- if the accelerator pedal is also completely released (Accelerator pedal released);
- if the engine speed is lower than a certain threshold (e.g. 1000 rpm) (Engine speed < n-stop) so that the engine may be considered as idling or almost idling;
- if the time from the previous engine starting is higher than a certain threshold (Time from last cranking > t-SSstop_min). This is a tabulated value which is function of the battery employed, in order to avoid starting and stopping the engine too frequently, which may damage the battery. In a possible embodiment the value t-SStop_min can vary according to the detected battery temperature and charging status, carried out by a circuit of the type known inside the battery or connected to it.

When all the previous conditions are positively fulfilled the engine is stopped (S&S Engine STOP), and goes back to the initial status (S&S ON). On the contrary if and until one of the previous conditions is negative, the engine is kept started (Engine ON).

On the contrary if the engine is stopped, verified in the status Engine ON, the following conditions are continually verified in order to determine when the engine has to be restarted:
first of all a possible emergency condition is verified, namely if the vehicle speed is higher than a certain threshold, e.g. 10 km/h, which corresponds to the highest acceptable speed with stopped engine (Vehicle speed > v_engstart AND engine speed = 0 rpm).

In case of emergency, the engine is started (S&S Engine START). Therefore a downhill starting takes place, e.g. if the vehicle starts to roll downward a street, which corresponds in fact to a condition of released clutch and gear shift in neutral. Beyond this maximum speed the engine starts, so that all the servo-mechanisms are activated, such as the power brake or the power steering, in order to control the emergency condition. For example a vehicle braking or other consequences may be expected.

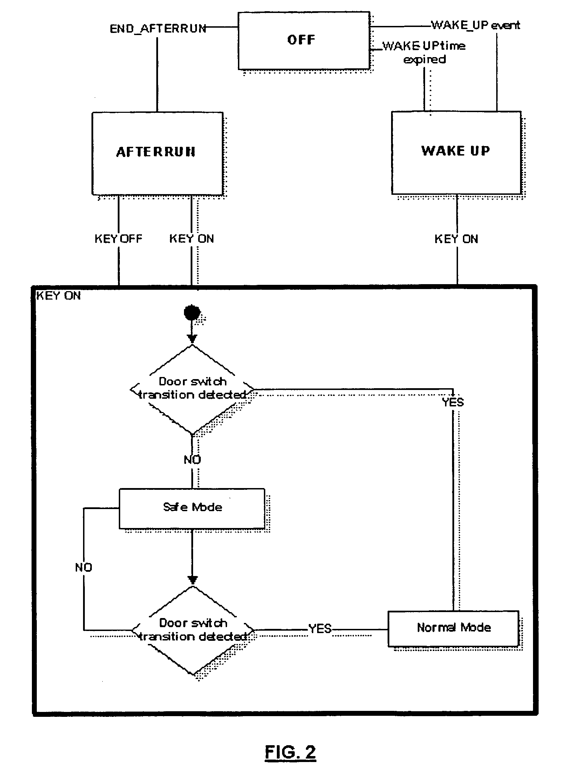

On the contrary if the vehicle speed is lower than the maximum acceptable speed threshold, that is the vehicle is considered to be at a standstill, and the engine is stopped, the following two further critical conditions are checked. First critical conditions is when the vehicle happens to be in a status called "safe-mode", in which the system tries to avoid detecting false conditions relative to the conditions of door switch, which detect the conditions of open or closed driver's door, in order to check if they work properly, namely that there are proper transitions between the open and closed conditions, as described in detail with reference to figure 2.

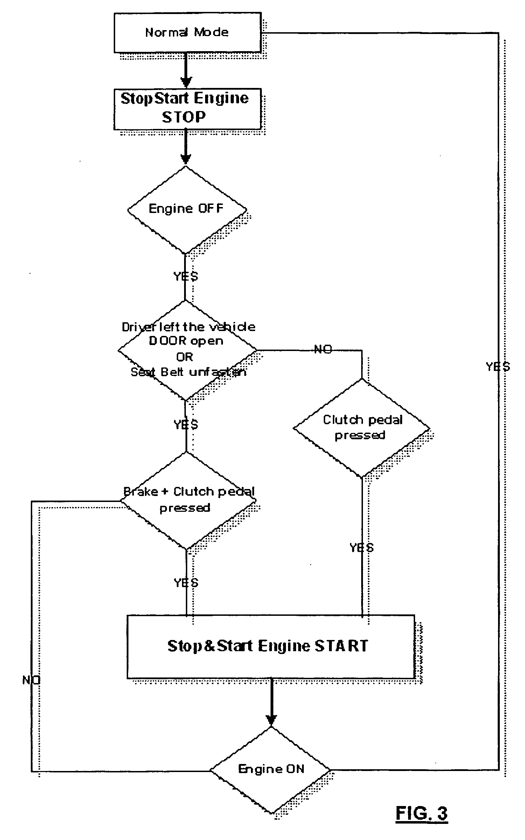

Second critical condition is when the vehicle is in a condition called "driver left the vehicle", in which the driver has left the vehicle: the system checks that, after getting in, the driver carries out the correct procedure with reference to figure 3.

If the check of the two previous critical conditions is negative, namely there is a critical condition, then the driver has to push completely and simultaneously the service break pedal and the clutch pedal in order to restart the engine, therefore switching to the started engine status (S&S Engine START), and to the initial status (S&S ON).

If on the contrary the check of the two previous critical conditions is positive, namely there is no critical condition and the functioning conditions are normal, in order to restart the engine it is sufficient that the driver pushes completely the clutch pedal only, therefore switching to the started engine status (S&S Engine START), and to the initial status (S&S ON).

With reference to figure 2, the check of the status "safe-mode" comprises the following procedure.

The vehicle control unit initially may be in a switched off condition OFF.

In an expected WAKE-UP condition, the control unit is "waked-up", (WAKE_UP event) that is it switches to an initial temporary operating condition, caused by remote control activation or door opening, which precedes an activation by the actual starting key, which causes the control unit to be in a "switched on" status (KEY-ON). If the activation does not occur, the control unit goes back to the OFF status (WAKE_UP time expired).

On the contrary in an AFTERRUN step, which follows the engine stopping by starting key (KEY-OFF), the vehicle control unit passes in a "temporarily switched on" status in which it stays "awake" in an operating condition for a certain time, e.g. for 3 minutes, then it switches off permanently.

As long as the control unit is operating, it checks the driver's door switches status.

When the control unit is in a KEY ON condition switching on, it checks if there has been a transition in the door opening status during the WAKE-UP period: in that case, it switches to a normal functioning mode, wherein in order to start the engine in condition of activation by S&S function it is enough to push the clutch pedal, as said before.

Otherwise the control unit passes to the "safe mode" condition in which it carries out a loop check of any open door transition: until when there is a correct transition of the open door switches, in order to start the engine in activating condition through S&S function the brake pedal and the clutch pedal have to be pushed simultaneously, as said before.

This check continues also in the AFTERRUN status, until the control unit switches off permanently, after 3 minutes.

With reference to figure 3, the check of the status "driver left the vehicle", condition wherein the vehicle is left, comprises the following procedure.

It is assumed that initially the functioning conditions are normal, namely in "normal mode" described above, wherein it is assumed that the door switches function properly.

When the S&S function (S&S Engine STOP) is in a condition which determines the engine stop (Engine OFF), it is checked if the vehicle has been left. This happens if the driver's door is opened or if the driver's safety belt is unfastened (door open OR seat belt unfastened).

In this case, in order to start the engine in activating condition by means of S&S function, the brake pedal and the clutch pedal have to be pushed simultaneously, as said before. Otherwise, in order to start the engine in activating condition by means of the S&S function it is enough to push the clutch pedal, as said before.

The device realizing the method described above is provided with a vehicular control unit equipped with an appropriate program and with a series of actuators or switches on the different vehicular elements that are controlled or used, most of them already present and known in the art, and which are appropriately connected to the control unit.

The vehicular control unit comprises a software for the realization of the method that is object of the invention, that may be realized by using design techniques known to the person skilled in the art.

The method described above may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

## Claims

1. Method for the starting and stopping of an engine by means of a stop and start function of a vehicle, in which said vehicle comprises an engine previously started, a mechanical transmission, at least one clutch pedal, an accelerator and a brake pedal, at least one electronic control unit; if the engine is started the method includes the steps of:
- check if the vehicle speed is lower than a first speed threshold (Vehicle speed < v_stop);
- check if the clutch pedal is completely released (Clutch pedal released);
- check if the accelerator pedal is completely released (Accelerator pedal released);
- check if the engine speed is lower than a certain engine speed threshold (Engine speed < n-stop);
- check if the time from the previous engine starting is higher than a threshold (Time from last cranking > t-SSstop_min);
if all the previous conditions are positively fulfilled the engine is stopped (S&S Engine STOP), otherwise if and until one of the previous conditions is negative, the engine is kept started (Engine ON);
and wherein if the engine is stopped, the further check step if the vehicle speed is higher than a second speed threshold (Vehicle speed > v_engstart AND engine speed = 0 rpm), then the engine is started (S&S Engine START);
and wherein if the vehicle speed is lower than said second threshold, these further check steps:
- of conditions relative to the correct transitions between the opened and closed status of the switches that detect the conditions of opened or closed driver's door; or
- of conditions relative to the correct operations made by the driver after leaving the vehicle;
if at least one of said checks is negative, the engine is restarted after the simultaneous and full activation of brake and clutch pedal;
otherwise if both said checks are positive, the engine is restarted after the clutch pedal is pressed;
**characterized in that** said check of condition relative to correct operations made by the driver after leaving the vehicle comprises the checking if the driver's door is open or if the driver's safety belt is unfastened.

2. Method according to claim 1, in which said electronic control unit can be in a "switched off" condition (OFF), in a "waked-up" condition (WAKE-UP), in a "switched on" condition by means of ignition key (KEY_ON), in a "temporarily switched on" condition (AFTERRUN) after engine stopping by ignition key, and in which said check of conditions relative to the correct transitions between the opened and closed status of the switches detecting the conditions of opened or closed driver's door, comprises the step which checks if during the "waked-up" (WAKE-UP) control unit step, "switched on" (KEY_ON) and "temporarily switched on" (AFTERRUN) there was a transition of the driver's door status: in case of transition, said check is positive; otherwise said check was negative, and continues until there is a proper transition of the open door switches.

3. Device for the starting and the stopping of the engine by means of the stop and start function of a vehicle, comprising at least an electronic control unit, and one or more actuators or switches on the different vehicular elements that are controlled or used, suitable for realizing the method of any of the previous claims.

4. Computer program comprising program code means suitable for performing the steps of any claim from 1 to 2, when such program is run on a computer.

5. Computer-readable means comprising a recorded program, said computer-readable means comprising program code means suitable for performing the steps according to the claims from 1 to 2, when said program is run on a computer.

## Patentansprüche

1. Verfahren zum Starten und Stoppen eines Motors mittels einer Stopp- und Startfunktion eines Fahrzeugs, in welchem das Fahrzeug aufweist: einen Motor, der vorher gestartet wurde, ein mechanisches Getriebe, mindestens ein Kupplungspedal, ein Beschleunigungs- und ein Bremspedal, mindestens eine elektronische Steuereinheit; falls der Motor gestartet ist, weist das Verfahren die Schritte auf:
- Prüfen, ob die Fahrzeuggeschwindigkeit niedriger ist als eine erste Geschwindigkeitsschwelle (Fahrzeuggeschwindigkeit < v_stop);
- Prüfen, ob das Kupplungspedal vollständig losgelassen ist (Kupplungspedal losgelassen);
- Prüfen, ob das Beschleunigungspedal vollständig losgelassen ist (Beschleunigungspedal losgelassen);
- Prüfen, ob die Motordrehzahl niedriger ist als eine bestimmte Motordrehzahlschwelle (Motordrehzahl < n-stop);
- Prüfen, ob die Zeit von dem vorherigen Motorstart größer ist als ein Schwellenwert (Zeit vom letzten Anlassen > t-SSstop_min);
falls alle vorherigen Bedingungen positiv erfüllt sind, wird der Motor gestoppt (S&S Motor STOPP (S&S Engine STOP)), andernfalls, wenn und solange eine von den vorherigen Bedingungen negativ ist, wird der Motor gestartet gehalten (Motor EIN (Engine ON));
und wobei, falls der Motor gestoppt ist, den weiteren Prüfschritt:
falls die Fahrzeuggeschwindigkeit höher ist als eine zweite Geschwindigkeitsschwelle (Fahrzeuggeschwindigkeit > v_engstart UND Motordrehzahl = 0 rpm), dann wird der Motor gestartet (S&S Motor START (S&S Engine START));
und wobei, falls die Fahrzeuggeschwindigkeit niedriger ist als die zweite Schwelle, diese weiteren Prüfschritte:
- von Zuständen in Bezug auf die korrekten Übergänge zwischen dem geöffneten und geschlossenen Status der Schalter, die die Zustände der geöffneten oder geschlossenen Fahrertür erfassen; oder
- von Zuständen in Bezug auf die korrekten Betätigungen, die durch den Fahrer gemacht werden, nach dem Verlassen des Fahrzeugs;
falls mindestens eine der Prüfungen negativ ist, wird der Motor nach der gleichzeitigen und vollständigen Aktivierung des Brems- und Kupplungspedals wieder gestartet;
andernfalls, falls die beiden Prüfungen positiv sind, wird der Motor wieder gestartet, nachdem das Kupplungspedal gedrückt wird;
**dadurch gekennzeichnet, dass** die Prüfung des Zustands in Bezug auf korrekte Betätigungen, die durch den Fahrer gemacht werden, nach dem Verlassen des Fahrzeugs die Prüfung umfasst, ob die Fahrertür offen ist oder ob der Sicherheitsgurt des Fahrers gelöst ist.

2. Verfahren nach Anspruch 1, in welchem die elektronische Steuereinheit sein kann in einem "ausgeschalteten" Zustand (AUS (OFF)), in einem "aufgeweckten" Zustand (AUFGEWECKT (WAKE-UP)), in einem "eingeschalteten" Zustand mittels Zündschlüssel (SCHLÜSSEL_AN (KEY_ON)), in einem "vorübergehend eingeschaltet" Zustand (NACHLAUF (AFTERRUN)) nach dem Abschalten des Motors durch den Zündschlüssel, und in welchem die Prüfung der Zustände in Bezug auf die korrekten Übergänge zwischen dem geöffneten und geschlossenen Status der Schalter, die die Zustände geöffnete oder geschlossene Fahrertür erfassen, den Schritt aufweist, der prüft, ob während des Schritts der "aufgeweckten" (AUFGEWECKT (WAKE-UP)) Steuereinheit, "eingeschaltet" (SCHLÜSSEL_AN (KEY_ON)) und "vorübergehend eingeschaltet" (NACHLAUF (AFTERRUN)) es einen Übergang des Status der Fahrertür gab: im Falle des Übergangs ist die Prüfung positiv; andernfalls war die Prüfung negativ und fährt fort bis es einen richtigen Übergang der Offene-Tür-Schalter gibt.

3. Vorrichtung zum Starten und Stoppen des Motors mittels der Stopp- und Startfunktion eines Fahrzeugs, umfassend mindestens eine elektronische Steuereinheit und einen oder mehrere Betätiger oder Schalter auf den verschiedenen Fahrzeugelementen, die gesteuert oder verwendet werden, geeignet zum Ausführen des Verfahrens nach einem der vorhergehenden Ansprüche.

4. Computerprogramm umfassend Programmcodemittel, die geeignet sind, um die Schritte nach einem der Ansprüche 1 bis 2 auszuführen, wenn ein solches Programm auf einem Computer ausgeführt wird.

5. Computerlesbare Mittel umfassend ein gespeichertes Programm, wobei die computerlesbaren Mittel Programmcodemittel umfassen, die geeignet sind, um die Schritte nach den Ansprüchen 1 bis 2 auszuführen, wenn das Programm auf einem Computer ausgeführt wird.

## Revendications

1. Procédé pour le démarrage et l'arrêt d'un moteur au moyen d'une fonction d'arrêt et de démarrage d'un véhicule, dans lequel ledit véhicule comprend un moteur démarré au préalable, une transmission mécanique, au moins une pédale d'embrayage, une pédale d'accélérateur et une pédale de frein, au moins une unité de commande électronique ; si le moteur est démarré, le procédé comprend les étapes suivantes :
- vérifier si la vitesse du véhicule est inférieure à une première vitesse seuil (vitesse du véhicule < v_stop) ;
- vérifier si la pédale d'embrayage est complètement relâchée (pédale d'embrayage relâchée) ;
- vérifier si la pédale d'accélérateur est complètement relâchée (pédale d'accélérateur relâchée) ;
- vérifier si la vitesse du moteur est inférieure à une certaine vitesse seuil du moteur (vitesse du moteur < n-stop) ;
- vérifier si le temps depuis le précédent démarrage du moteur est supérieur à une valeur seuil (temps depuis le dernier démarrage > t-SSstop_min) ;
si toutes les conditions précédentes sont remplies positivement, le moteur est arrêté (S&S Engine STOP), autrement si et tant que l'une des conditions précédentes est négative, le moteur est maintenu démarré (ENGINE ON) ;
et dans lequel si le moteur est arrêté, il comprend l'autre étape de vérification si la vitesse du véhicule est supérieure à une seconde vitesse seuil (vitesse du véhicule > v_engstart AND vitesse du moteur = 0 tr/min), puis le moteur est démarré (S&S Engine START) ;
et dans lequel si la vitesse du véhicule est inférieure à ladite seconde valeur seuil, il comprend ces autres étapes de vérification :
- de conditions relatives aux transitions correctes entre l'état ouvert et fermé des commutateurs qui détectent les conditions de la porte du conducteur ouverte ou fermée ; ou
- de conditions relatives aux opérations correctes faites par le conducteur après avoir quitté le véhicule ;
si au moins l'une desdites vérifications est négative, le moteur est redémarré après l'activation simultanée et complète de la pédale de frein et d'embrayage ;
autrement si les deux vérifications sont positives, le moteur est redémarré après que la pédale d'embrayage est pressée ;
**caractérisé en ce que** ladite vérification de condition relative aux opérations correctes faites par le conducteur après avoir quitté le véhicule comprend la vérification de l'ouverture de la porte du conducteur ou du non bouclage de la ceinture de sécurité du conducteur.

2. Procédé selon la revendication 1, dans lequel ladite unité de commande électronique peut être dans une condition « désactivée » (OFF), dans une condition d'« éveil » (WAKE-UP), dans une condition « activée » à l'aide de la clé de contact (KEY_ON) dans une condition « temporairement activée » (AFTERRUN) après l'arrêt du moteur par la clé de contact, et dans lequel ladite vérification de conditions relatives aux transitions correctes entre l'état ouvert et fermé des commutateurs détectant les conditions de la porte du conducteur ouverte ou fermée, comprend l'étape qui vérifie si pendant l'étape d'« éveil » (WAKE-UP), « activée » (KEY_ON) et « temporairement activée » (AFTERRUN) de l'unité de commande, il y a eu une transition de l'état de la porte du conducteur : en cas de transition, ladite vérification est positive ; autrement ladite vérification était négative, et continue tant qu'il y a une transition correcte des commutateurs de porte ouverte.

3. Dispositif pour le démarrage et l'arrêt du moteur au moyen de la fonction d'arrêt et de démarrage d'un véhicule comprenant au moins une unité de commande électronique, et un ou plusieurs actionneurs ou commutateurs sur les différents éléments du véhicule qui sont contrôlés ou utilisés, lequel dispositif est adapté pour réaliser le procédé selon l'une quelconque des revendications précédentes.

4. Programme informatique comprenant des moyens de code de programme adaptés pour réaliser les étapes selon l'une quelconque des revendications 1 à 2 lorsqu'un tel programme est exécuté sur un ordinateur.

5. Moyens lisibles par ordinateur comprenant un programme enregistré, lesdits moyens lisibles par ordinateur comprenant des moyens de code de programme adaptés pour réaliser les étapes selon les revendications 1 à 2, lorsque ledit programme est exécuté sur un ordinateur.
